(19) Europäisches Patentamt
European Patent Office
Office européen des brevets

(11) Veröffentlichungsnummer : **0 074 966**
**B1**

(12) **EUROPÄISCHE PATENTSCHRIFT**

(45) Veröffentlichungstag der Patentschrift :
**15.05.85**

(51) Int. Cl.⁴ : **B 01 D 29/04**, B 01 D 29/38,
B 01 D 25/38, B 01 D 21/00

(21) Anmeldenummer : **82900788.9**

(22) Anmeldetag : **24.03.82**

(86) Internationale Anmeldenummer :
**PCT/CH 82/00047**

(87) Internationale Veröffentlichungsnummer :
**WO/8203338 (14.10.82 Gazette 82/25)**

(54) **FILTERVORRICHTUNG ZUR TRENNUNG VON FLÜSSIGKEITEN UND FESTSTOFFEN.**

(30) Priorität : **25.03.81 CH 2005/81**

(43) Veröffentlichungstag der Anmeldung :
**30.03.83 Patentblatt 83/13**

(45) Bekanntmachung des Hinweises auf die Patenterteilung : **15.05.85 Patentblatt 85/20**

(84) Benannte Vertragsstaaten :
**AT BE CH DE FR GB LI LU NL SE**

(56) Entgegenhaltungen :
**FR-A- 1 361 317**
**US-A- 2 603 354**

(73) Patentinhaber : **PROMETALL AG**
**Etzelstrasse 4**
**CH-8730 Uznach (CH)**

(72) Erfinder : **FUX, Kamil**
**Schiebel**
**CH-8716 Schmerikon (CH)**
Erfinder : **GRESA, Ludwig**
**Mühlau 12**
**CH-8730 Uznach (CH)**

(74) Vertreter : **Meyer, Reinhard, Dipl.-Ing.**
**c/o Dr. A. R. Egli & Co. Patentanwälte Horneggstrasse 4**
**CH-8008 Zürich (CH)**

## Beschreibung

Die Erfindung betrifft eine Vorrichtung zum Ausfiltern von Feststoffen aus einer Trübe, insbesondere aus Abwasser in einer Kläranlage, mittels beidseitig zugänglichen Filterplatten, wobei auf der Anschwemmseite eine über die Filterplatten bewegbare Schlammentnahmevorrichtung und auf der Filtratseite eine an den Filterplatten anliegende und über diese bewegbare Abspritzvorrichtung vorgesehen sind, wobei die Abspritzvorrichtung zur Zufuhr von Reinigungsflüssigkeit einen Abspritzstutzen mit Abspritzdüsen aufweist.

Die Trennung von Wasser und Feststoffen im heutigen Kläranlagenbetrieb erfolgt beinahe ausschliesslich im Sedimentationsbecken.

Diese Art von Trennung ist unvollständig, weil die Feststoffe sehr leicht sind und in grösseren Mengen durch das abfliessende Wasser aus dem Sedimentationsbecken ausgetragen werden.

Besonders gross ist die Feststoffaustragung dann, wenn hydraulische Stösse auftreten oder wenn der biologische Abbau durch etwas Gifteinwirkung oder durch einseitige Abwasserzusammensetzung gestört wird. Diese bekannten Nachteile des Absetzbeckens werden durch zwei Gegenmassnahmen kompensiert : Flockung oder Filtration, oder die Kombination dieser zwei Massnahmen.

Für die Filtration des Absetzbeckens sind schon mehrere Filtereinrichtungen bekannt. Sie haben alle eine Gemeinsamkeit : sie werden alle dem Sedimentationsbecken nachgeschaltet.

In der Schweizer Patentschrift 553 558 sind drehbare Trommelfiltereinrichtungen beschrieben, welche direkt in eine biologische Anlage eingebaut werden. Dieser Trommelfilter hat eine auf dem Staubsaugerprinzig aufgebaute Reinigungsvorrichtung, welche auf der Filterfläche aufliegt und durch Absaugen die Filtermedien rückspült.

Bei diesen Filtern werden hauptsächlich filzartige Filtermedien verwandt, welche durch Mikroorganismen und Algen zuwachsen. Durch die starke Saugkraft der Pumpe wird bei verstopftem Filter der Reibungswiderstand zwischen der Absaugvorrichtung und dem Filtermedium so gross, dass das Filtermedium von der Trommel gerissen wird.

Diese bekannte Filtervorrichtung weist noch einen weiteren grossen Nachteil auf. Es ist allgemein bekannt, dass eine Saugpumpe nie mit mehreren parallel geschalteten Saugrohren funktioniert. Wasser wird nur dort durch das Rohr gesaugt, wo der Widerstand am kleinsten ist. Ebenso ist es bei der Filterreinigung. Die Filteroberfläche wird mit Absaugung an jenen Stellen am besten gereinigt, wo sie am wenigsten verstopft ist.

Aus diesem Grund ist bei dieser bekannten Vorrichtung die Breite der zu reinigenden Filterbahn beschränkt. Bei breiteren Absaugstutzen ist die Funktion dieser Art Filterreinigung fragwürdig.

In der US-Patentschrift Nr. 3 575 850 ist ein ähnlicher Trommelfilter beschrieben. Die Filterreinigung erfolgt hier durch Abspritzen der an die Luft aufgetauchten Oberfläche des Filtermediums. Die aufiltrierten, suspendierten Stoffe werden hier durch eine Sammelrinne abgeleitet.

Diese Filtereinrichtungen sind immer grosse, drehbare Filtervorrichtungen, mit schlechter Flächenausnützung zum Filtervolumen. Sie weisen noch einen Nachteil auf, sie müssen immer in einem separaten, für den Filter angefertigten Becken installiert werden. Die Gefällverluste in den Zu- und Ableitungskanälen und in der Filtervorrichtung sind meistens so gross, dass die vorhandenen natürlichen Gefälle nicht mehr ausreichen. Somit muss noch ein zusätzliches Abwasserhebewerk installiert werden.

Es ist noch eine Filtervorrichtung bekannt, wo ein grobmaschiges Filtergewebe zwischen den Abflussrinnen waagrecht montiert ist. Das Abwasser fliesst durch die Filtermedie von unter nach oben durch ; auf dem Gewebe baut sich mit der Zeit von der Anschwemmseite her eine Schlammschicht auf, welche als Filterschicht wirkt. Die Filterreinigung erfolgt manuell durch Absenken des Wasserspiegels und Abspritzen des Gewebes mit Leitungswasser.

Nachteil dieser Filtervorrichtung ist die manuelle Bedienung. Nur grobmaschige Filtermedie kann verwendet werden, damit die Reinigungsintervalle möglichst lang sind. Der Filter muss für die Reinigung ausser Betrieb gesetzt werden.

Im übrigen ist die Abwasserfiltration relativ neu. Sie wird als weitergehende Reinigung angewendet und muss in den meisten Fällen in einer bestehenden Abwasserreinigungsanlage zusätzlich montiert werden.

Alle vorher erwähnten Filtertypen brauchen ein separates Filterbecken und, wenn das natürliche Gefälle nicht ausreicht, noch ein zusätzliches Hebewerk.

Weiterhin zeigt die FR-A-1 361 317 eine Schlammentnahmevorrichtung, bei welcher ein Filter schräg in einer Strömung angeordnet ist. Auf der Anschwemmseite wird der Filter grob durch einen Abkratzer von den angeschwemmten Feststoffen gereinigt, diesem Abkratzer folgt auf der Abschwemmseite eine Reinigungsdüse nach. Damit gelangt jedoch das von der Reinigungsdüse wieder entfernte Filtrat wieder zurück in die Flüssigkeit und setzt sich erneut an einer anderen Stelle am Filter fest.

Die US-A-2 603 354 zeigt ebenfalls einen in der Strömung einer zu reinigenden Flüssigkeit angeordneten Filter, welcher von der Abschwemmseite her angespritzt wird. Auch bei diesem Filter gelangen die auf der Anschwemmseite abgespritzten Filtratrückstände wiederum in die Flüssigkeit.

Dieser Erfindung liegt dagegen die Aufgabe zugrunde, eine einfache und preisgünstige Filtereinrichtung zu schaffen, welche in sehr wirtschaftlicher Weise auch in die bestehenden Absetzbecken oder auch als alleinstehende Filtereinrichtungen montiert werden kann. Insbesondere soll die Filtrierung dadurch verbessert werden, dass eine Möglichkeit geschaffen wird, die ausgefilterten Feststoffe zu entfernen, ohne dass sie wiederum in die Flüssigkeit gelangen. Weiterhin darf die Filtervorrichtung nur wenig Baufläche benötigen und mit geringen Gefällverlusten arbeiten. Ausserdem muss die Filtervorrichtung aus normierten, kleinflächigen Elementen bestehen, welche sich in jedem bestehenden Becken für jede Tiefe und Breite baukastenmässig zusammenfügen lassen.

Zur Lösung dieser Aufgabe führt eine Vorrichtung der o. g. Art, bei welcher die Schlammentnahmevorrichtung einen gegenüber dem Abspritzstutzen angeordneten Schlammentnahmestutzen zur Aufnahme und Abführung der ausgespülten Feststoffe aufweist und die Schlammentnahmevorrichtung derart an den Filterplatten anliegt, dass eine Ansaugung von Trübe (Falschwasser) verhindert ist.

Bevorzugt soll die Filterplatte aus einem, eine Filtermedie tragendem Stützgitter bestehen, welches Abspritzkammern bildet, wobei beim Beaufschlagen mit Reinigungsflüssigkeit eine Abspritzkammer von Abdeckplatten abgedeckt ist, welche eine Öffnung für die Aufnahme der Abspritzdüse bilden, und dass der an der Filtermedie anliegende Teil der Schlammentnahmevorrichtung eine am Schlammentnahmestutzen angeordnete Entnahmeplatte ist.

Dadurch, dass das auf der Filterfläche aufgespritzte Wasser wegen dem auf kleinere Felder verteilten Stützgitter oder wegen der speziellen Ausführungsform der Abdeckplatten seitlich nicht ausweichen kann, wird die Filterreinigung wirksam und der Rücksprühwasserverbrauch niedrig.

In einer Ausführungsform ist die Filtervorrichtung als U-förmige Rinne ausgebildet, so dass sie in einem bestehenden Absetzbecken installiert werden kann. Somit entfallen die Kosten für neue Becken, wie auch für Kanäle und eventuelle Pumpwerke. In gewissen Fällen ist es möglich, die Filterreinigungsvorrichtung auf des bestehenden Schlammräumerbrücke zu installieren und damit noch weitere preisliche Vorteile zu erzielen.

Die Filterreinigung geschieht gleichzeitig durch starkes Abspritzen und geringe Absaugung, so dass zwischen der Filteroberfläche kein grosser Reibungswiderstand entstehen kann ; das Filtermaterial wird weitgehend geschont und die Lebensdauer des Filtermaterials bedeutend erhöht.

Dieser aus einer oder mehreren U-förmigen Rinnen bestehende Filter kann auf einer kleinen Baufläche als eine sehr grosse Filterfläche installiert werden.

Dadurch, dass die Absaugung nur der Entnahme des Schlammes dient, und nicht für die Reinigung vorgesehen ist, können auf einer Absaugpumpe breite oder mehrere Schlammentnahmevorrichtungen installiert werden.

Die eingangs beschriebene Filterreinigungsvorrichtung kann, je nach Bedarf, in drei Bewegungsrichtungen installiert werden. Vorzugsweise wird die horizontale Bewegungsrichtung dann angewendet, wenn die Filtervorrichtung eines Abflusskanals ein Absetzbecken ersetzt.

Bei dieser Anordnung können die Filterplatten in einem runden Absetzbecken an der Randzone installiert werden. Die relativ kurzen Filterplatten bilden dann ein zur Kreisform angenähertes Vieleck. Die Reinigungsvorrichtung wird dann auf der Räumerbrücke montiert.

Bei grösseren Filtereinheiten dürfte die vertikale Reinigungsrichtung vorteilhafter sein, weil auf einer kleinen Baufläche eine sehr grosse Filteroberfläche installiert werden kann.

Bei dieser Anordnung ist die Betätigung der Filterreinigungsvorrichtung auf dem einfachen Aufzugsprinzip aufgebaut.

Diese Filteranordnung ist vorzugsweise als Ersatz für Vorklärbecken geeignet. Aus den Filterplatten werden tiefe, U-förmige Rinnen gebildet und über dem Trichterteil angeordnet. Die Filtermedie besteht für diesen Bedarfsfall aus sehr glattem, oberflächigem Kunststoffoder Stahlgewebe. Die groben Abwasserinhaltstoffe rutschen durch das Eigengewicht in den Trichter, nur die feineren Flocken werden auf der Filteroberfläche aufgetragen und durch die Filterreinigungsvorrichtung entfernt.

Die Filterplatten und die dazu gehörende Filterreinigungsvorrichtung können auch waagrecht installiert werden. Die Filterplatten ersetzen dann den Boden eines flachen Gefässes. Bei dieser Anordnung werden auch die gleichen Bauelemente verwendet wie bei der senkrechten Anordnung.

Dadurch, dass die Filterplatten automatisch gereinigt werden, können feinmaschige Filtermedien verwendet werden, und es müssen die Filter für die Reinigung nicht ausser Betrieb gesetzt werden.

Ausführungsbeispiele der Erfindung werden nachfolgend anhand der Zeichnungen näher erläutert ; dabei zeigen :

Figur 1 eine Filtervorrichtung mit senkrecht bewegter Filterreinigungsvorrichtung im Schnitt,

Figur 2 eine Filtervorrichtung mit senkrecht bewegter Filterreinigungsvorrichtung in Seiten-Ansicht,

Figur 3 eine Filterplatte mit auf Spritzkammern verteiltem Stützgitter und Filterreinigungsvorrichtung,

Figur 4 eine Filterplatte mit Stützgitter und mit Spritzkammer versehene Abspritzvorrichtung,

Figur 5 eine Filtervorrichtung mit horizontal bewegter Filterreinigungsvorrichtung im Schnitt,

Figur 6 eine Filtervorrichtung mit horizontal bewegter Filterreinigungsvorrichtung in Daraufsicht,

Figur 7 eine Filtervorrichtung mit waagrecht montierten Filterplatten im Schnitt,

Figur 8 eine Filtervorrichtung mit waagrecht montierten Filterplatten in Daraufsicht.

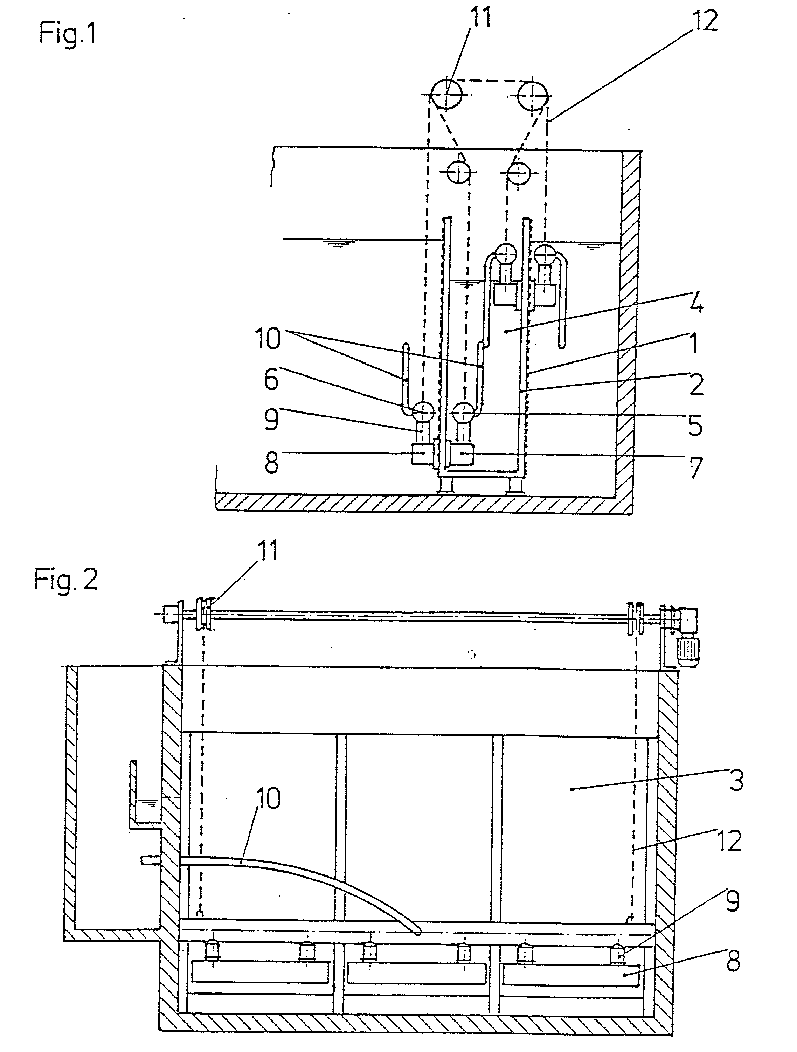

Die Fig. 1 zeigt eine Filterrinne mit senkrechter Filterreinigung im Schnitt, und die Fig. 2 die gleiche, mit Sicht von der Anschwemmseite her.

Die Filtermedie (1) mit einem Traggitter (2) bildet eine Filterplatte (3). Die Filterplatten werden vorzugsweise immer auf gleicher Breite erstellt und in den Becken so angeordnet, dass sie eine U-förmige Filterrinne (4) bilden. Bei Grossanlagen werden mehrere Rinnen nebeneinander angebracht. Bei Kleinanlagen dagegen kann die Filtervorrichtung nur aus einer Filterplatte bestehen.

Der Durchfluss des Wassers erfolgt durch die Filterplatte von der Filtermedienseite (1) her, von dem durch den Niveauunterschied entstandenen Ueberdruck.

Auf der Anschwemmseite der Filterplatte lagern sich bei der Filtration die suspendierten Stoffe an und verstopfen den Filter.

Die Filterreinigung erfolgt durch mehrere auf den Druck- (5) und Saugleitungen (6) montierte Abspritz- (7) und Schlammentnahmestutzen (8). Diese beiden Stutzen sind mit flexiblen Schläuchen (9) mit den Druck- und Saugleitungen verbunden, dass sie sich den Unebenheiten der Filterplatte (3) anpassen können. Die Länge der Abspritz- und Schlammentnahmestutzen sind zu der Breite der Filterplatten abgestimmt.

Die Abspritz- und Schlammentnahmedüsen können auch direkt ohne Zwischenschläuche (9) an der Druck- (5) und Saugleitung (6) montiert werden. In diesem Fall sind die Abdeckplatten (15) beweglich mit der Druck- und Saugleitung verbunden.

Die Saug- und Druckrohre sind mit flexiblen Schläuchen (10) an den nicht abgebildeten Saug- und Druckpumpen angeschlossen. Die Pumpen können auch auf die Saug- und Druckrohre montiert werden.

In gewissen Fällen, hauptsächlich bei Kleinfilteranlagen, kann auch auf die Schlammentnahmepumpe verzichtet werden. In diesem Fall wird der Schlammentnahmeschlauch in einem tieferliegenden Schacht unter Wasser geführt, und die Schlammentnahme erfolgt durch statischen Ueberdruck.

Die Druck- und Saugrohre werden miteinander durch eine Aufzugsvorrichtung (11) durch eine Kette oder Seilzug (12) bewegt.

Die Fig. 1 zeigt eine zweckmässige Ausbildung des Antriebes. An beiden Enden des Kettenzuges (12) ist je ein Filterreinigungsvorrichtungspaar montiert, das sich gegeneinander bewegt. Das Gewicht der Reinigungsvorrichtung wird so ausgeglichen und die Antriebskraft wird kleiner.

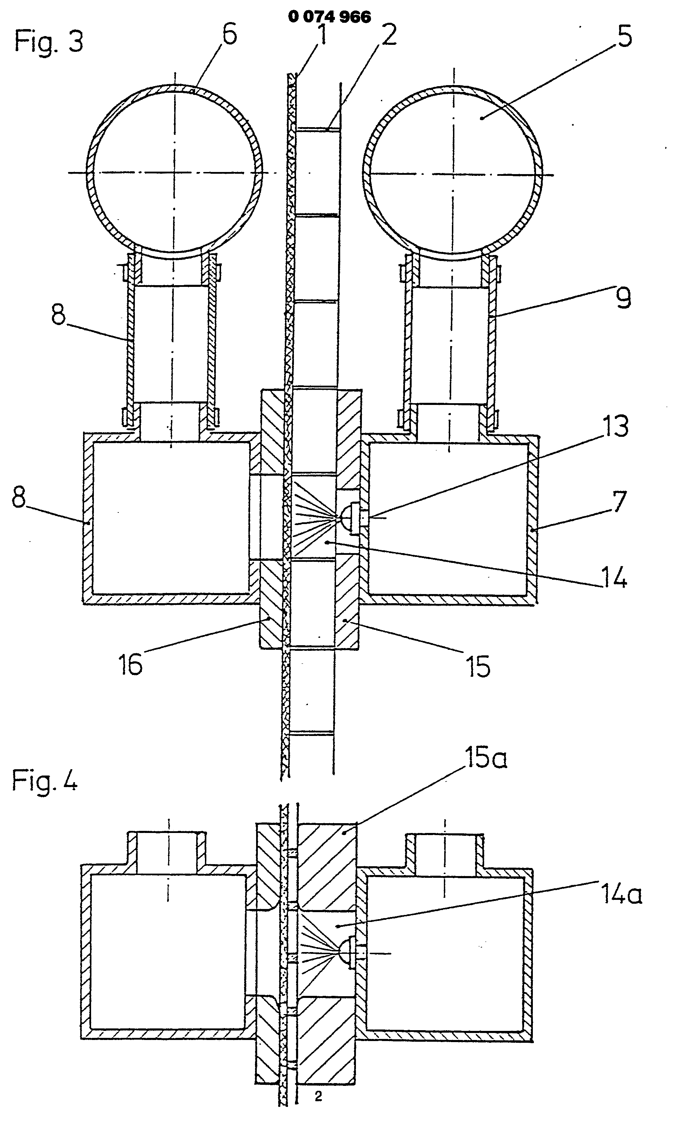

Die Filterreinigung ist in Fig. 3 und Fig. 4 abgebildet. Die Reinigungsflüssigkeit (z. B. bereits filtrierte Abwasser) wird von dem Abspritzstutzen (7) durch eine Reihe von Abspritzdüsen (13) in eine Abspritzkammer (14) gespritzt. Die Abspritzkammer ist von dem Stützgitter (2) und der Abdeckplatte (15) (zugedeckt) begrenzt. Die eingespritzte Reinigungsflüssigkeit kann seitlich nicht ausweichen, muss also die Filtermedie (1) durchspülen. Aus der Filtermedie werden die ausgespülten, ungelösten Stoffe auf der anderen Seite durch den Schlammentnahmestutzen (8) entnommen. Die Ansaugung von Falschwasser aus dem Becken wird durch eine Schlammentnahmeplatte (16) verhindert.

In Fig. 4 ist eine ähnliche Filterreinigungsvorrichtung abgebildet. Die Druckkammer (14a) wird hier nicht von dem Stützgitter, sondern von der Druckplatte (15a) gebildet.

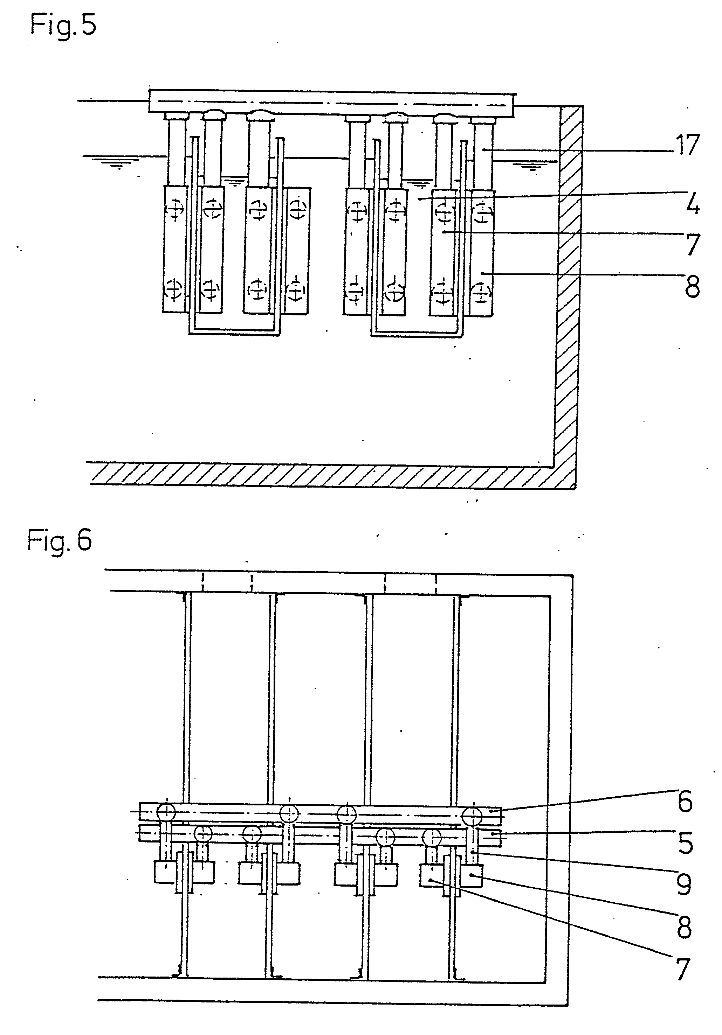

In Fig. 5 ist ein Filter im Schnitt, mit waagrecht bewegter Reinigung, abgebildet.

Die Fig. 6 zeigt den gleichen Filter in Daraufsicht. In dieser Anordnung ersetzt die Filterrinne (4) eine Abflussrinne bei einem bestehenden Becken.

Die Filterreinigungsstutzen (7) und (8) werden hier auch mit den flexiblen Verbindungsschläuchen (9) und mit einem Zwischenrohr (17) an die Druck- (5) und Saugrohre (6) angeschlossen.

Die Druck- und Saugrohre sind an einem nicht abgebildeten Räumerwagen montiert. Ebenso werden die Filterreinigungspumpen an diese Räumerwagen angebracht.

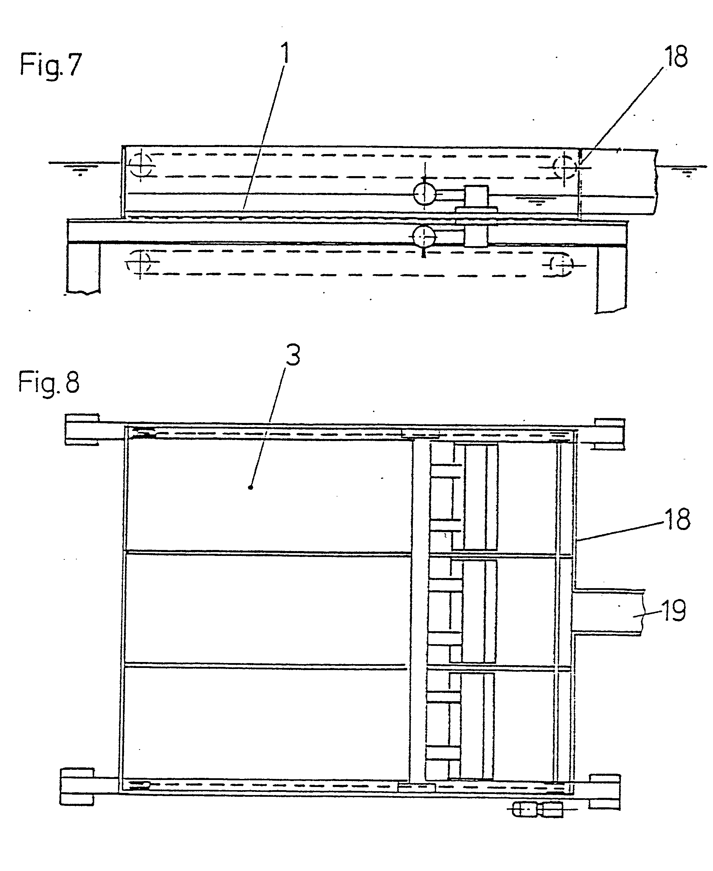

In Fig. 7 ist eine Filtervorrichtung mit waagrecht montierten Filterplatten im Schnitt abgebildet, und in Fig. 8 in Daraufsicht. Die Filterplatten (3) bilden hier den Boden eines Gefässes (18). Die Wasserdurchströmung erfolgt von unten durch die Filtermedie (1) in das Innere des Gefässes und wird über einen Kanal (19) abgeleitet. Die Filterreinigung erfolgt auf gleiche Weise wie bei der waagrechten Anordnung.

**Patentansprüche**

1. Vorrichtung zum Ausfiltern von Feststoffen aus einer Trübe, insbesondere aus Abwasser in einer Kläranlage, mittels beidseitig zugänglichen Filterplatten (3), wobei auf der Anschwemmseite eine über die Filterplatten (3) bewegbare Schlammentnahmevorrichtung und auf der Filtratseite eine an den Filterplatten (3) anliegende und über diese bewegbare Abspritzvorrichtung vorgesehen sind, wobei die Abspritzvorrichtung zur Zufuhr von Reinigungsflüssigkeit einen Abspritzstutzen (7) mit Abspritzdüsen (13) aufweist, dadurch gekennzeichnet, dass die Schlammentnahmevorrichtung einen gegenüber dem Abspritzstutzen (7) angeordneten Schlammentnahmestutzen (8) zur Aufnahme und Abführung der ausgespülten Feststoffe aufweist, und dass die Schlammentnahmevorrichtung derart an den Filterplatten (3) anliegt, dass eine Ansaugung von Trübe (Falschwasser) verhindert ist.

2. Vorrichtung nach Anspruch 1, dadurch gekennzeichnet, dass die Filterplatte (3) aus einem eine Filtermedie (1) tragendem Stützgitter (2) besteht, welches Abspritzkammern (14) bildet, wobei beim Beaufschlagen mit Reinigungsflüssigkeit eine Abspritzkammer (14) von Abdeckplatten (15) abgedeckt ist, welche eine Öffnung für die Aufnahme der Abspritzdüse (13) bilden, und dass der an der Filtermedie (1) anliegende Teil der Schlammentnahmevorrichtung eine am Schlammentnahmestutzen (8) angeordnete Entnahmeplatte (16) ist.

3. Vorrichtung nach Anspruch 1, dadurch gekennzeichnet, dass an dem Abspritzstutzen (7) eine Druckplatte (15a) angeordnet ist, welche an der Filterplatte (3) anliegt und eine Druckkammer (14a) zur Aufnahme der Düsen (13) bildet und dass der an den Filterplatten (3) anliegende Teil der Schlammentnahmevorrichtung eine am Schlammentnahmestutzen (8) angeordnete Entnahmeplatte (16) ist.

4. Vorrichtung nach einem der Ansprüche 1-3, dadurch gekennzeichnet, dass an dem Schlammentnahmestutzen (8) eine Saugpumpe oder ein tiefliegendes Niveau anschliesst.

5. Vorrichtung nach einem der Ansprüche 1-4, dadurch gekennzeichnet, dass die Anspritz- bzw. Entnahmevorrichtungen bei senkrechter bzw. waagerechter Anordnung der Filterplatten (3) über die Filterfläche in Längsrichtung bzw. Querrichtung bewegbar sind.

6. Vorrichtung nach einem der Ansprüche 1-5, dadurch gekennzeichnet, dass die Filterplatten (3) eine U-förmige Filterrinne (4) bilden, wobei die sich gegenüberliegenden Filterplatten (3) mit je einer Anspritz- und einer Entnahmevorrichtung belegt sind, welche über eine Kette bzw. Seilzug (12) und eine Aufzugsvorrichtung (11) miteinander verbunden und gegeneinander bewegbar sind.

7. Vorrichtung nach einem der Ansprüche 1-6, dadurch gekennzeichnet, dass die Filterplatten (3) gleiche Grösse aufweisen und gemäss einem Modulsystem zusammengesetzt sind.

**Claims**

1. Apparatus for filtering out solid matter from muddy water, in particular sewage water in a sewage treatment plant, by means of filter plates (3), accessible from both sides, in which there is a movable mud removal device on the alluvial side above the filter plates (3) and that there is a wash-off device adjacent to and movable above these plates (3), the wash-off device being provided with a connecting pipe (7) with a nozzle (13) for the supply of cleaning fluid, characterized in that the mud removal device comprises a mud removal pipe (8) opposite the connecting pipe (7) for the receipt and removal of the washed-out solide matter, and that the mud removal device is adjacent to the filter plates, so that a suction of the sewage (or faulty) water is being prevented.

2. Apparatus according to claim 1, characterized in that the filter plate (3) consists of a supporting grid (2) carrying a filter medium (1), that the grid (2) forms washing chambers (14), so that when cleaning fluid is filled in, a washing chamber (14) is being covered by plates (15), forming an opening for the receipt of the supply nozzle (13), and that the part adjacent to the filter medium (1) of the mud removal device is a removal plate (16) placed at the mud removal pipe (8).

3. Apparatus according to claim 1, characterized in that a pressure plate (15a) is being placed at the connecting pipe (7) and is being adjacent to the filter plate (3) and forms a pressure chamber (14a) for receipt of the nozzles (13), and that the part of the mud removal device adjacent to the filter plate (3) is a removal plate (16) placed on the mud removal pipe (8).

4. Apparatus according to one of the claims 1 to 3, characterized in that a suction pump or a lower level is adjacent to the mud removal pipe (8).

5. Apparatus according to one of the claims 1 to 4, characterized in that the washing or removal device, with a vertical or horizontal arrangement of the filter plates (3) above the filter surface are movable in the longitudinal direction or perpendicular thereto.

6. Apparatus according to one of the claims 1 to 5, characterized in that the filter plates (3) form a U-shaped filter channel (4), that the filter plates (3) opposing each other are occupied by a washing and a removal device, which are connected to each other via a chain or tackle (12) and a lifting device (11) and are movable toward each other.

7. Apparatus according to one of the claims 1 to 6, characterized in that the filter plates (3) have the same size and that they are assembled according to a modular system.

**Revendications**

1. Dispositif de filtrage pour la séparation de liquides et de matières solides, notamment à partir des eaux usées dans une installation de purification, au moyen de plaques filtrantes (3) accessibles des deux côtés, l'installation comprenant, du côté de l'arrivée, un dispositif d'évacuation des boues qui peut se déplacer au-dessus des plaques filtrantes (3) et, du côté du produit filtré, un dispositif d'arrosage monté sur les plaques filtrantes qui peut se déplacer au-dessus d'elles, ce dispositif d'arrosage comportant, pour l'amenée du liquide de nettoyage, une tubulure d'arrosage (7) avec des buses d'arrosage (13), caractérisé en ce que le dispositif d'évacuation des boues comporte une tubulure (8) d'évacuation des boues, placée en face de la tubulure d'arrosage (7), pour la réception et l'évacuation des matières solides séparées par arrosage, et en ce que le dispositif d'évacuation des boues est monté, au contact des plaques filtrantes (3), de telle manière que toute aspiration de liquide trouble soit impossible.

2. Dispositif selon la revendication 1, caractérisé en ce que la plaque filtrante (3) est constituée par une grille de support (2) portant les milieux filtrants (1) et constituant des chambres d'arrosage (14), ces chambres d'arrosage (14) étant, pour la projection du liquide d'arrosage, recou- vertes de plaques de recouvrement (15) qui forment une ouverture pour le passage de la buse d'arrosage (13) et en ce que la partie du dispositif d'évacuation des boues, qui se trouve au contact du milieu filtrant (1) est constituée par une plaque d'évacuation (16) montée sur la tubulure (8) d'évacuation des boues.

3. Dispositif selon la revendication 1, caractérisé en ce qu'à la tubulure d'arrosage (7) correspond une plaque de pression (15a) qui prend appui sur la plaque filtrante (3) et forme une chambre à pression (14a) destinée à recevoir les buses (13) et en ce que la partie du dispositif d'évacuation des boues qui est au contact des plaques filtrantes (3) est constituée par une plaque d'évacuation (16) montée sur la tubulure (8) d'évacuation des boues.

4. Dispositif selon l'une des revendications 1 à 3, caractérisé en ce que la tubulure (8) d'évacuation des boues est reliée à une pompe aspirante ou à un niveau plus bas.

5. Dispositif selon l'une des revendications 1 à 4, caractérisé en ce que les dispositifs d'arrosage et d'évacuation peuvent, lorsque les plaques filtrantes (3) sont placées verticalement ou horizontalement, se déplacer dans le sens longitudinal ou dans le sens transversal au-dessus de la surface filtrante.

6. Dispositif selon l'une des revendications 1 à 5, caractérisé en ce que les plaques filtrantes (3) forment une gouttière de filtrage (4) en forme de U, les plaques filtrantes (3) situées l'une en face de l'autre comportant chacune un dispositif d'arrosage et un dispositif d'évacuation qui peuvent se déplacer, sous l'action d'une chaîne ou d'un câble (12) et d'un dispositif de transport (11) en étant liés l'un à l'autre et en se déplaçant l'un vers l'autre.

7. Dispositif selon l'une des revendications 1 à 6, caractérisé en ce que les plaques filtrantes (3) ont la même grandeur et sont associées suivant un système modulaire.

Fig.1

Fig. 2

0 074 966

Fig. 3

Fig. 4

Fig.5

Fig. 6

Fig. 7

Fig. 8